(19) Europäisches Patentamt
European Patent Office
Office européen des brevets

(11) **EP 4 494 846 A1**

(12) **EUROPEAN PATENT APPLICATION**
published in accordance with Art. 153(4) EPC

(43) Date of publication:
**22.01.2025 Bulletin 2025/04**

(21) Application number: 23770174.3

(22) Date of filing: **08.02.2023**

(51) International Patent Classification (IPC):
**B29C 55/12** (2006.01)    **B32B 27/34** (2006.01)
**C08J 5/18** (2006.01)    **B29K 77/00** (2006.01)
**B29L 7/00** (2006.01)

(52) Cooperative Patent Classification (CPC):
**B29C 55/12; B32B 27/34; C08J 5/18;** Y02E 60/10

(86) International application number:
**PCT/JP2023/004182**

(87) International publication number:
**WO 2023/176213 (21.09.2023 Gazette 2023/38)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **16.03.2022 JP 2022041877**

(71) Applicant: **Toyobo Co., Ltd.**
**Kita-ku**
**Osaka-shi, Osaka 530-0001 (JP)**

(72) Inventors:
• **GOTO Takamichi**
**Inuyama-shi, Aichi 484-8508 (JP)**
• **TAMARI Noboru**
**Inuyama-shi, Aichi 484-8508 (JP)**
• **TORII Ayame**
**Inuyama-shi, Aichi 484-8508 (JP)**

(74) Representative: **Vossius & Partner**
**Patentanwälte Rechtsanwälte mbB**
**Siebertstrasse 3**
**81675 München (DE)**

(54) **BIAXIALLY ORIENTED POLYAMIDE FILM**

(57) It is provided that a polyamide film having excellent water resistance as a packaging bag. In addition, it is provided that a polyamide film which has excellent cold formability, inhibits dimensional accuracy from being reduced due to springback after forming, and has excellent warp resistance. A biaxially oriented polyamide film comprising: 5 mass% or more and 90 mass% or less of polyamide 6; and 10 mass% or more and 95 mass% or less of polyamide resin derived from biomass, wherein a content of radiocarbon (C14) is 10% or more and 95% or less with respect to a total content of carbon, the biaxially oriented polyamide film has a piercing strength of 0.71 N/$\mu$m or more and 1.0 N/$\mu$m or less, the biaxially oriented polyamide film has a piercing strength of 0.40 N/$\mu$m or more after retort treatment is performed at 115°C for 30 minutes, and the biaxially oriented polyamide film has a heat shrinkage rate of 3.0% or less in each of an MD direction and a TD direction after being heated at 160°C for ten minutes.

**EP 4 494 846 A1**

**Description**

**TECHNICAL FIELD**

The present invention relates to a polyamide film, and relates to a polyamide film that has excellent cold formability and that can be suitably used for usage in which the film is molded after metal foil is laminated, in particular, for battery outer packages, medicine packaging, and the like.

**BACKGROUND ART**

A biaxially oriented polyamide film has excellent mechanical characteristics, thermal characteristics, and gas barrier properties, and is thus widely used for packaging materials of various foods and the like. For a biaxially oriented polyamide film used for packaging foods and the like, polyamide 6 is used as a main component in general. However, polyamide 6 intrinsically absorbs water with ease. Therefore, when a packaging bag is subjected to retort-sterilization treatment in hot water having a temperature of higher than 100°C, the polyamide film becomes brittle, the strength thereof is reduced, and the bag may be broken. In such usage that requires the retort-sterilization treatment as described above, it is difficult to use the polyamide film at the top surface layer of a packaging material, and a film having excellent water resistance such as a polyethylene terephthalate (PET) film needs to be stacked.

In recent years, laminate-type lithium ion battery outer packaging materials, press through packs, and the like have been obtained by cold-forming a multilayer body formed of a resin film and metal foil. For the multilayer body to be subjected to the cold-forming, a structure of, for example, a polyethylene terephthalate film/biaxially stretched nylon film/aluminum foil/polypropylene film, is used in general. (See, for example, Patent Document 1.)

Needs for a packaging form having foil of a metal such as aluminum have increased in order to prevent deterioration of contents also in medicine packaging, and formability of the metal foil according to the shape of the content is required to be enhanced.

Patent Document 2 discloses a multilayer body in which at least a base layer, an adhesive layer, a metal layer, and a sealant layer are sequentially stacked, and indicates that good formability is obtained by setting to be a sum (A+B) of a value A of stress at 50% elongation/stress at 5% elongation in the MD direction, and a value B of stress at 50% elongation/stress at 5% elongation in the TD direction within a specific range in the base layer.

Meanwhile, in the above-described cold forming, a phenomenon (springback) that, after draw-forming, a part of the formed product is returned from a shape after the forming to a shape before the forming, may become a problem. Such springback may cause a problem that dimensional accuracy of the shape after the draw-forming is insufficient. Furthermore, since a portion around a to-be-formed portion is strongly drawn during a forming process, and a base layer around the formed portion may thus be returned to a shape before the forming when the forming process has been performed, warpage occurs and a yield may be reduced in the post-processing. Even if an F5 value and an F50 value of the film are merely controlled as in Patent Document 2 indicated above for addressing these problems, although a forming depth is improved, the technique disclosed therein is insufficient for addressing reduction of dimensional accuracy caused by springback after the forming, and improving warp resistance after the forming.

PRIOR ART DOCUMENTS

PATENT DOCUMENT

Patent Document 1: Japanese Laid-Open Patent Publication No. 2008-053133
Patent Document 2: International Publication No. 2015-125806

**SUMMARY OF THE INVENTION**

PROBLEMS TO BE SOLVED BY THE INVENTION

The present invention has been made in view of such problems of conventional art. An object of the present invention is to provide a polyamide film having excellent water resistance as a packaging bag. In addition, the present invention provides a polyamide film which has excellent cold formability, inhibits dimensional accuracy from being reduced due to springback after forming, and has excellent warp resistance.

SOLUTION TO THE PROBLEMS

The inventors of the present invention have found, as a result of thorough studies, that, in a case where the film includes a polyamide resin derived from biomass, a specific stretching condition range is selected, and mechanical characteristics of the film are controlled to be within a predetermined range, the film has excellent piercing strength also after retort treatment, and have achieved the present invention.

That is, the present invention has the following configurations.

[Item 1] A biaxially oriented polyamide film comprising: 5 mass% or more and 90 mass% or less of polyamide 6; and 10 mass% or more and 95 mass% or less of polyamide resin derived from biomass, wherein a content of radiocarbon (C14) is 10% or more and 95% or less with respect to a total content of carbon, the biaxially oriented polyamide film has a piercing strength of 0.71 N/$\mu$m or more and 1.0 N/$\mu$m or less, the biaxially oriented polyamide film has a piercing strength of 0.40 N/$\mu$m or more after retort treatment is performed at 115°C for 30 minutes, and the biaxially oriented polyamide film has a heat shrinkage rate of 3.0% or less in each of an MD direction and a TD direction after being heated at 160°C for ten minutes.

[Item 2] The biaxially oriented polyamide film according to item 1, wherein a stress attenuation rate indicated by the following Formula (1) is 12.0% or more in each of the MD direction and the TD direction in a tensile stress relaxation test at 25°C,

$$\text{Formula (1)} \quad \text{stress attenuation rate (\%)} = 100 \times (\sigma 0 - \sigma 1)/\sigma 0$$

in which $\sigma 0$ represents a value of a tensile stress obtained immediately after a 50% tensile strain is applied to the film by applying a tensile force at a tensile rate of 200 mm/min, and $\sigma 1$ represents a value of a tensile stress obtained when the 50% tensile strain is held for two seconds from $\sigma 0$.

[Item 3] The biaxially oriented polyamide film according to item 2, wherein, when X(MD) and X(TD) represent stresses at 3% elongation at 25°C in the MD direction and the TD direction, respectively, of the film, Y(MD) and Y(TD) represent stresses at 30% elongation at 25°C in the MD direction and the TD direction, respectively, of the film, and Z(MD) and Z(TD) represent values of Y(MD)/X(MD) and Y(MD)/X(MD), respectively, the following Formulas of (2) to (5) are all satisfied.

$$\text{Formula (2)} \quad 100 \text{ MPa} \leq Y(MD) \leq 150 \text{ MPa}$$

$$\text{Formula (3)} \quad 110 \text{ MPa} \leq Y(TD) \leq 200 \text{ MPa}$$

$$\text{Formula (4)} \quad 1.4 \leq Z(MD) \leq 2.2$$

$$\text{Formula (5)} \quad 2.5 \leq Z(TD) \leq 3.5$$

[Item 4] The polyamide film according to any one of items 1 to 3, wherein the polyamide resin derived from biomass is one or more kinds of polyamide resins selected from the group consisting of polyamide 11, polyamide 410, polyamide 610, and polyamide 1010.

[Item 5] A multilayer body comprising: the biaxially oriented polyamide film according to any one of items 1 to 4, an adhesive layer; and a sealant layer.

[Item 6] A multilayer body comprising: the biaxially oriented polyamide film according to any one of items 1 to 4, a gas barrier layer; and a sealant layer.

[Item 7] The multilayer body according to item 6, wherein the gas barrier layer includes metal foil.

[Item 8] A battery outer package material comprising the multilayer body according to item 6 or 7.

EFFECTS OF THE INVENTION

By using the biaxially oriented polyamide film of the present invention, excellent water resistance for packaging bags can be obtained, and excellent durability in retort-sterilization treatment can be imparted even when the film is used at the top surface layer of the packaging bag. Furthermore, reduction of dimensional accuracy due to springback after forming is inhibited and warp resistance is excellent, so that dimensional accuracy in forming is excellent, and furthermore, use of a carbon neutral raw material can contribute to reduction of load on the environment.

## BRIEF DESCRIPTION OF THE DRAWINGS

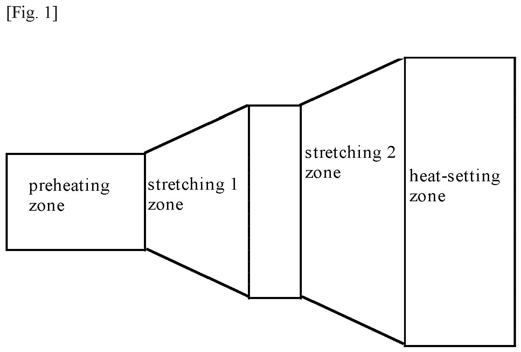

[FIG. 1] FIG. 1 is a schematic diagram illustrating a method for performing multi-stage stretching in a TD direction in a film producing process.

## DESCRIPTION OF EMBODIMENTS

The present invention will be described below in detail.

A biaxially oriented polyamide film of the present invention is a film formed of a polyamide resin composition that includes 5 mass% or more and 90 mass% or less of polyamide 6, and 10 mass% or more and 95 mass% or less of a polyamide resin derived from biomass. In a case where the film includes a polyamide resin in which at least a part of a raw material is derived from biomass, at a proportion of 10 mass% or more and 95 mass% or less, a carbon-neutral film that inhibits reduction of strength also in severe hydrothermal treatment such as retort-sterilization treatment, and is unlikely to influence increase and decrease of carbon dioxide on the ground, can be obtained.

The polyamide 6 used in the present invention is produced by ring-opening polymerization of ε-caprolactam in general. The polyamide 6 obtained by ring-opening polymerization is dried and then melt-extruded by an extruder after lactam monomers are removed by using hot water in general.

The relative viscosity of the polyamide 6 is preferably 1.8 to 4.5 and more preferably 2.6 to 3.2. If the relative viscosity is less than 1.8, the film may have insufficient impact strength. If the relative viscosity is more than 4.5, a load on the extruder is increased, and it may be difficult to obtain a non-stretched film before stretching. The polyamide 6 used in the present invention may be polyamide 6 that is commercially available from UBE Corporation, BASF, or the like. Particularly, polyamide 6 which is commercially available as polyamide 6 for films, has the above-described relative viscosity, has a residual lactam monomer content of 1 mass% or less, has blocked or modified terminals, and is unlikely to generate lactam monomers during melting, is preferable.

As the polyamide 6, in addition to generally used polyamide 6 obtained by polymerization from monomers derived from fossil fuel, polyamide 6 that is chemically recycled from waste polyamide 6 products such as waste plastic products, waste tire rubber, fibers, and fishing nets can also be used. Examples of a method for obtaining the polyamide 6 chemically recycled from the waste polyamide 6 products include a method in which used polyamide products are collected and the collected products are thereafter depolymerized to obtain ε-caprolactam, and the ε-caprolactam is refined and polyamide 6 is obtained through polymerization.

In addition, polyamide 6 obtained by mechanically recycling waste materials discharged in the polyamide film producing process can be used in combination. The mechanically recycled polyamide 6 refers to, for example, a raw material obtained in a manner in which off specification films that are generated during production of biaxially stretched polyamide films and cannot be shipped or waste materials generated as cut end materials (selvage trims) are collected and pelletized through melt-extrusion or compression molding.

The polyamide resin derived from biomass for use in the present invention is preferably one or more kinds of polyamide resins selected from the group consisting of polyamide 11, polyamide 410, polyamide 610, and polyamide 1010.

The polyamide 11 is a polyamide resin having a structure in which monomers each having 11 carbon atoms are bonded via an amide bond. In general, polyamide 11 is obtained by using aminoundecanoic acid or undecane lactam as the monomer. Particularly, aminoundecanoic acid is a monomer obtained from castor oil, and is preferable from the viewpoint of carbon neutrality. The proportion of the structural units derived from the monomers each having 11 carbon atoms is preferably 50 mol% or more, more preferably 80 mol% or more, and may be 100 mol% with respect to all the structural units in the polyamide 11. The polyamide 11 is produced by ring-opening polymerization of undecane lactam in general as described above. The polyamide 11 obtained by the ring-opening polymerization is dried and then melt-extruded by an extruder after lactam monomers are removed by using hot water in general. The relative viscosity of the polyamide 11 is preferably 1.8 to 4.5 and more preferably 2.4 to 3.2.

The polyamide 410 is a polyamide resin having a structure obtained by copolymerizing monomers each having four carbon atoms and diamine having ten carbon atoms. Sebacic acid and tetramethylenediamine are used for the polyamide 410 in general. Sebacic acid in which castor oil as vegetable oil is a raw material is preferably used as sebacic acid from an environmental viewpoint. Sebacic acid used herein is preferably sebacic acid obtained from castor oil from the viewpoint of protecting the environment (particularly from the viewpoint of carbon neutrality).

The polyamide 610 is a polyamide resin having a structure obtained by polymerizing diamine having six carbon atoms and dicarboxylic acid having ten carbon atoms. Hexamethylenediamine and sebacic acid are used in general. Among them, sebacic acid is a monomer obtained from castor oil and is preferable from the viewpoint of carbon neutrality.

The total proportion of structural units derived from monomers each having six carbon atoms and structural units derived from monomers each having ten carbon atoms is preferably 50 mol% or more and more preferably 80 mol% or more, and may be 100 mol% with respect to all the structural units in PA610.

The polyamide 1010 is a polyamide resin having a structure obtained by polymerizing diamine having ten carbon atoms and dicarboxylic acid having ten carbon atoms. For the polyamide 1010, 1,10-decanediamine (decamethylenediamine) and sebacic acid are used in general. Decamethylenediamine and sebacic acid are monomers obtained from castor oil, and are preferable from the viewpoint of carbon neutrality. The total proportion of structural units derived from diamine having ten carbon atoms and structural units derived from dicarboxylic acid having ten carbon atoms is preferably 50 mol% or more and more preferably 80 mol% or more, and may be 100 mol% with respect to all the structural units in PA1010.

The biaxially oriented polyamide film of the present invention may include a thermoplastic resin other than the polyamide 6 and the polyamide resin derived from biomass in order to improve stretchability, pinhole resistance, ease of cutting, and the like. Furthermore, the biaxially oriented polyamide film may include a small amount of an additive such as an anti-blocking agent, a lubricating agent, an antistatic agent, a thermal stabilizer, and a light resisting agent.

Examples of the thermoplastic resin used in the present invention include homopolymers or copolymers of polyamide-based resins, polyester-based resins, polyolefin-based resins, acrylic-based resins, polycarbonate-based resins, polyvinyl-based resins, and urethane-based resins.

According to one mode of the present invention, the biaxially oriented polyamide film may include polyamide MXD6 and/or polyamide 6I in order to enhance stretchability when the film is formed. The content of these polyamides is preferably 20 mass% or less, more preferably 10 mass% or less, and further preferably 5 mass% or less with respect to a resin composition forming the biaxially oriented polyamide film.

According to one mode of the present invention, the biaxially oriented polyamide film may include a polyamide elastomer, a polyester elastomer, a polyolefin elastomer, or the like in order to enhance pinhole resistance.

According to one mode of the present invention, the biaxially oriented polyamide film may include inorganic particulates of silica, kaolin, zeolite, or the like, or crosslinked polymeric particulates of acryl, polystyrene, or the like as an anti-blocking agent or a lubricant. Silica particulates are suitably used from the viewpoint of transparency and slipperiness.

According to one mode of the present invention, the biaxially oriented polyamide film may include an organic lubricating agent having an effect of lowering surface energy, as a lubricating agent, to the extent that problems as to adhesiveness and wettability do not arise. Examples of the organic lubricating agent include ethylenebisstearamide (EBS). Using the combination of the above-described anti-blocking agent and lubricating agent is preferable, because excellent slipperiness and transparency can be imparted to the film simultaneously by using the combination.

A method for obtaining the biaxially oriented polyamide film of the present invention is not particularly limited and can be selected as appropriate, and may be, for example, a T-die method or an inflation method. A typical production process in which a T-die method is used will be described. The T-die method includes (1) melt-extruding a polyamide resin composition into a sheet-like shape and cooling the obtained sheet on a cooling roll to form an unstretched sheet, (2) a stretching step of stretching the formed unstretched sheet in an MD direction (longitudinal direction) and a TD direction (width direction) orthogonal to the MD direction, (3) a heat-setting step of heating and crystallizing the film having been subjected to the stretching step, (4) a thermal relaxation step (may also be referred to as relaxing step) of removing residual strain of the film having been subjected to the heat-setting step, and (5) a cooling step of cooling the film after the thermal relaxation.

The film of the present invention may have at least a monolayer structure formed of one layer or have a multilayer structure formed of two or more layers. The film may have two layers, three layers, four layers, or five layers.

As one mode for obtaining the biaxially oriented polyamide film of the present invention, a step of performing preliminary stretching of the unstretched sheet in the MD direction at a low ratio, and thereafter performing main stretching in the MD direction at a high ratio, is preferably included.

The above-described MD preliminary stretching is preferably performed with one stage or two stages. The total stretching ratio obtained by multiplying the stretching ratios in the respective MD preliminary stretchings is preferably 1.005 times or more and 1.15 times or less. If the stretching ratio is excessively low in the MD preliminary stretching, an effect of improving strain at moisture absorption as described below is not easily obtained. Meanwhile, in a case where the preliminary stretching ratio is 1.15 times or less, progress of oriented crystallization can be prevented, and breakage can be inhibited from being caused during the main stretching or TD stretching due to stretching stress becoming excessively high in the succeeding MD main stretching.

The temperature for the MD preliminary stretching is preferably [glass-transition temperature (the unit is °C, hereinafter abbreviated as Tg) of the polyamide resin composition+20]°C or higher and [low-temperature crystallization temperature (the unit is °C, hereinafter abbreviated as Tc) of the polyamide resin composition+20]°C or lower. Tg and Tc are values obtained by measurement in which the method described in Examples is used. By performing the MD preliminary stretching at a temperature of (Tg+20)°C or higher, necking can be prevented, and unevenness in thickness can be reduced. By performing the stretching at a temperature of (Tc+20)°C or lower, progress of thermal crystallization can be prevented, and breakage can be inhibited in the TD stretching process. The stretching temperature is more preferably (Tg+30)°C or higher and (Tc+10)°C or lower. For the MD preliminary stretching, a known longitudinal stretching method such as thermal roll stretching or infrared radiation stretching can be used.

The MD main stretching is preferably performed in two or more stages. The ratio of the first stage of the MD main stretching is preferably 1.1 times or more and 2.9 times or less. If the stretching ratio in the first stage of the main machine direction stretching is excessively low, the stretching effect is not obtained. Meanwhile, in a case where the stretching ratio in the first stage is 2.9 times or less, progress of oriented crystallization can be prevented.

In the MD main stretching, the stretching temperature at the first stage is preferably (Tg+20)°C or higher and (Tc+20)°C or lower. If the stretching temperature is lower than (Tg+20)°C, stretching stress becomes high, and breakage is likely to occur in the TD stretching. If the stretching temperature is higher than (Tc+20)°C, unevenness in thickness may be increased. The stretching temperature is more preferably (Tg+25)°C or higher and (Tc+10)°C or lower. In the first stage of the MD main stretching, a known MD stretching method such as thermal roll stretching or infrared radiation stretching can be used.

The ratios in the second and the succeeding stages of the MD main stretching are set such that the total stretching ratio obtained by multiplying the stretching ratios including the MD preliminary stretching ratios is preferably 2.8 times or more and 5.0 times or less, more preferably 3.0 times or more and 3.8 times or less, and further preferably 3.0 times or more and 3.6 times or less. If the total stretching ratio is less than 2.8 times, although variation in physical properties of the biaxially oriented film in the width direction is reduced, strength in the longitudinal direction may be reduced. If the total machine direction stretching ratio is excessively large, an effect of reducing variation in physical properties of the biaxially oriented film in the width direction may not be exhibited.

The stretching temperature at the second stage in the MD main stretching is preferably (Tg+20)°C or higher and (Tc+20)°C or lower and more preferably (Tg+25)°C or higher and (Tc+10)°C or lower. If the stretching temperature is lower than (Tg+20)°C, stretching stress becomes high, and breakage is likely to occur in the TD stretching. If the stretching temperature is higher than (Tc+20)°C, unevenness in thickness may be increased.

A thermal roll stretching method is preferably used at the second stage of the MD main stretching. As the thermal roll, a ceramic roll having a surface roughness Ra of 0.2 μm or less is preferably used. Using a roll having the Ra of more than 0.2 μm is not preferable, because stretching may be performed in a state where the film slides on the roll, and abrasion may disadvantageously occur on the film surface. The stretching start points on the roll may become non-uniform in the width direction, or the stretching start point may vary, so that the thickness may become uneven. At the second stage in the MD main stretching, regardless of the thickness profile, in the width direction, of the film having been subjected to the first stage of the MD main stretching, the film is preferably stretched on the roll in a state of being linearly in close contact therewith in the width direction, and heated and stretched uniformly in the width direction. In the description herein, Ra represents a center line average roughness and represents an average projecting and recessed height (unit=μm), and is a value defined by JIS B 0601.

In the stretching process, a relaxing step (hereinafter, also referred to as MD relaxation) in the MD direction is preferably performed before the TD direction stretching process following the MD direction stretching process. The lower limit of the MD relaxation rate is preferably 1%, more preferably 3%, and particularly preferably 5%. In a case where the MD relaxation rate is 1% or more, amorphous components in the film may be relaxed, and the stretching stress can be lowered in the succeeding TD direction stretching process, so that the orientation of the film can be inhibited from being excessively high, and springback and curling after forming can be inhibited. The upper limit of the MD relaxation rate is preferably 10%, more preferably 8%, and particularly preferably 6%. In a case where the MD relaxation rate is 10% or less, wrinkling due to shrinkage can be inhibited, and the quality of the film can be enhanced, and furthermore, mechanical strength can be inhibited from being reduced due to orientation relaxation. Examples of the MD relaxation method include, but are not particularly limited to, a method in which the relaxing process is performed by using difference in speed between rolls after heating is performed by a hot air heater.

The lower limit of the stretching temperature in the TD direction is preferably 90°C, more preferably 100°C, and particularly preferably 110°C. In a case where the stretching temperature in the TD direction is 90°C or higher, the stretching stress can be lowered, and springback and curling after forming can thus be inhibited. The upper limit of the stretching temperature in the TD direction is preferably 140°C, more preferably 130°C, and particularly preferably 120°C. If the stretching temperature in the TD direction is higher than 140°C, a film forming property may be degraded, and, furthermore, orientation of the obtained film in the TD direction may be low, so that formability may be degraded.

The lower limit of the stretching ratio in the TD direction is preferably 2.5 times, more preferably 3.0 times, and particularly preferably 3.5 times. In a case where the stretching ratio in the TD direction is 2.5 times or more, the film has good mechanical strength and thickness variation properties, and furthermore, formability is enhanced. The upper limit of the stretching ratio in the TD direction is preferably 5.0 times, more preferably 4.5 times, and particularly preferably 4.0 times. In a case where the stretching ratio in the TD direction is 5.0 times or less, the orientation in the TD direction is inhibited from being high, and springback and curling after forming can be inhibited.

As the stretching pattern in the TD direction, not only a generally used linear stretching pattern in which the stretching ratio is linearly increased, but also multi-stage stretching can be preferably used. In the multi-stage stretching, two or more stages are performed in the stretching process as in the example illustrated in FIG. 1, with respect to general one-stage stretching, that is, a linear stretching pattern, and stretching stress applied during the TD direction stretching can be lowered. As a result, even when the stretching ratio is the same, orientation in the TD direction can be inhibited from being excessively high, and springback and curling after forming can be inhibited.

The number of stages in the multi-stage stretching in the TD direction is preferably two or more and five or less. The multi-stage stretching is preferable since each of the stretching temperatures can be changed and the stretching stress can be changed, and the stretching stress during the TD direction stretching can be lowered. In a case where the number of stages in the stretching is two or more, stretching stress can be lowered, and, even when the stretching ratio is the same, orientation in the TD direction can be inhibited from being excessively high, and springback and curling after forming can be inhibited. In a case where the number of stages in the stretching is five or less, the equipment can be prevented from being excessively large. In the multi-stage stretching, a temperature pattern in which the temperature is reduced from the first stage of stretching to the final stage of stretching such that the temperature is made different by 2°C or more per each stage of stretching, is preferable. In a case where the multi-stage stretching is performed, a zone having a fixed length can be provided following each stretching stage as appropriate. In a case where the zone having a fixed length is provided following each stretching stage, stretching stress can be further lowered in the succeeding stretching by relaxing, in the fixed length zone, internal stress generated during the stretching, and, even when the stretching ratio is the same, orientation in the TD direction can be inhibited from being excessively high, and springback and curling after forming can be inhibited.

In the heat-setting process, the lower limit of the heat-setting temperature is preferably 170°C, more preferably 180°C, and particularly preferably 190°C. At a heat-setting temperature of 170°C or higher, the heat shrinkage rate can be reduced. The upper limit of the heat-setting temperature is preferably 230°C, more preferably 220°C, and particularly preferably 210°C. At a heat-setting temperature of 230°C or lower, mechanical strength can be inhibited from being reduced due to the biaxially oriented polyamide film becoming brittle.

In the thermal relaxation process, the lower limit of the relaxation rate in the TD direction is preferably 0.5%, more preferably 1.0%, and particularly preferably 2.0%. In a case where the relaxation rate is 0.5% or more, the heat shrinkage rate in the TD direction can be maintained to be low. The upper limit of the relaxation rate in the TD direction is preferably 10%, more preferably 8%, and particularly preferably 6%. In a case where the relaxation rate is 10% or less, looseness and the like can be prevented and planarity can be enhanced.

The biaxially oriented polyamide film of the present invention can also be subjected to corona treatment, coating treatment, flame treatment, or the like in order to further enhance adhesiveness and wettability. The above-described treatment can also be performed while the biaxially oriented polyamide film is being produced. The treatment may be performed by winding off a mill roll or slit roll.

The lower limit of the thickness of the biaxially oriented polyamide film of the present invention is preferably 5 μm and more preferably 10 μm. In a case where the thickness thereof is 5 μm or more, good mechanical characteristics and formability can be obtained. The upper limit of the thickness of the biaxially oriented polyamide film of the present invention is preferably 100 μm, more preferably 70 μm, and particularly preferably 40 μm.

In the biaxially stretched polyamide film of the present invention, a content (also referred to as biomass degree) of carbon derived from biomass as measured with radiocarbon (C14) according to ASTM D6866-18 is preferably 10% or more and 95% or less with respect to the total content of carbon in the polyamide film. Since carbon dioxide in the atmosphere contains C14 at a certain proportion (105.5 pMC), the C14 content in plants, such as corn, which grow by taking in carbon dioxide from the atmosphere is also known to be about 105.5 pMC. It is also known that fossil fuel substantially contains no C14. Therefore, the proportion of carbon derived from biomass can be calculated by measuring the proportion of C14 included in all carbon atoms in the film.

The lower limit of piercing strength of the biaxially oriented polyamide film of the present invention is preferably 0.71 **N/μm** and more preferably 0.80 **N/μm**. In a case where the piercing strength is 0.71 **N/μm** or more, good strength and formability can be obtained. The upper limit of the piercing strength of the biaxially oriented polyamide film of the present invention is, but is not particularly limited to, preferably 1.0 **N/μm** or less. If the piercing strength is more than 1.0 **N/μm**, an effect of enhancing formability may be saturated. In the present invention, the piercing strength (**unit is N/μm**) is a value obtained by dividing strength (unit is N) obtained when a needle having a tip radius of 0.5 mm pierces the film at a piercing speed of 50 mm/minute and the needle penetrates through the film by the thickness (**unit is μm**) of the film.

In the biaxially oriented polyamide film of the present invention, piercing strength after the retort treatment performed at 115°C for 30 minutes is preferably 0.40 **N/μm or more and** more preferably 0.50 **N/μm or more**. In a case where the piercing strength is 0.4 **N/μm or more**, required strength can be maintained after the retort-sterilization treatment also in a packaging bag having the polyamide film stacked at the top surface layer. The upper limit of the piercing strength after the retort treatment is, but is not particularly limited to, preferably 1.0 **N/μm or** less.

The biaxially oriented polyamide film of the present invention has a heat shrinkage rate of 3.0% or less, more preferably 2.5%, and further preferably 2.0% in each of the TD direction and the MD direction after being heated at 160°C for ten minutes. In a case where the heat shrinkage rate is 3.0% or less, dimensional change can be inhibited when heating is performed in a secondary processing step, and wrinkling can be inhibited. The lower limit of the heat shrinkage rate is preferably 0.5% or more, more preferably 0.8% or more, and further preferably 1.0% or more.

Next, springback during forming will be described.

In a case where molding is performed for battery outer packages, medicine packaging, and the like, the film is pressed into a mold having a predetermined shape, the film is thereafter held for a certain time period in the pressed state, and the mold is thereafter taken up to produce a molded body. If the mold is taken up in a state where the internal stress in the film is not sufficiently relaxed in the holding time period, a force for returning the film to an original shape acts, and springback is increased, so that dimensional accuracy of the molded body may be reduced. The inventors of the present invention have found that the springback can be reduced in a case where the stress attenuation rate of the film having been held for two seconds is within a specific range in a tensile stress relaxation test of the obtained biaxially oriented polyamide film.

In the biaxially oriented polyamide film of the present invention, the stress attenuation rate indicated by the following Formula (1) is preferably 12% or more and more preferably 14% or more in each of the MD direction and the TD direction in the tensile stress relaxation test at 25°C.

$$\text{stress attenuation rate (\%) after the film is held for two seconds} = 100 \times (\sigma 0 - \sigma 1)/\sigma 0 \qquad \text{Formula (1)}$$

In the formula (1), $\sigma 0$ represents a value of a tensile stress of the film, which is obtained immediately after a 50% tensile strain is applied to the film by applying a tensile force at a tensile rate of 200 mm/min, and $\sigma 1$ represents a value of a tensile stress obtained when the 50% tensile strain is held for two seconds from $\sigma 0$.

In the biaxially oriented polyamide film of the present invention, when Y(MD) represents a stress (F30 value) at 30% elongation at 25°C in the MD direction of the film, and Y(TD) represents a stress (F30 value) at 30% elongation at 25°C in the TD direction, the following Formulas (2) and (3) are preferably satisfied.

$$\text{Formula (2)} \quad 100 \text{ MPa} \leq Y(MD) \leq 150 \text{ MPa}$$

$$\text{Formula (3)} \quad 110 \text{ MPa} \leq Y(TD) \leq 200 \text{ MPa}$$

In a case where the value of Y(MD) is 100 MPa or more, excellent formability can be obtained. Meanwhile, in a case where the value of Y(MD) is 150 MPa or less, stress of the film after the molding can be inhibited from being excessively high, springback and warp resistance after the molding can be reduced, and good formability can be obtained. Similarly, in a case where the value of Y(TD) is 110 MPa or more, excellent formability can be obtained. In a case where the value of Y(TD) is 200 MPa or less, stress of the film after the molding can be inhibited from being excessively high, springback and warp resistance after the molding can be reduced, and good formability can be obtained.

In the biaxially oriented polyamide film of the present invention, when X(MD) represents a stress (F3 value) at 3% elongation at 25°C in the MD direction of the film, X(TD) represents a stress (F3 value) at 3% elongation at 25°C in the TD direction, Z(MD) represents a value of Y(MD)/X(MD), and Z(TD) represents a value of Y(TD)/X(TD), the following Formulas (4) and (5) are preferably satisfied.

$$\text{Formula (4)} \quad 1.4 \leq Z(MD) \leq 2.2$$

$$\text{Formula (5)} \quad 2.5 \leq Z(TD) \leq 3.5$$

In a case where the value of Z(MD) is 1.4 or more, excellent formability can be obtained. Meanwhile, in a case where the value of Z(MD) is 2.2 or less, stress of the film after the molding can be inhibited from being excessively high, springback and warp resistance after the molding can be reduced, and good formability can be obtained. Similarly, in a case where the value of Z(TD) is 12.5 or more, excellent formability can be obtained. In a case where the value of Z(TD) is 3.5 or less, stress of the film after the molding can be inhibited from being excessively high, springback and warp resistance after the molding can be reduced, and good formability can be obtained.

The present invention provides a multilayer body in which at least the biaxially oriented polyamide film of the present invention, an adhesive layer, and a sealant layer are stacked in this order. According to one mode of the present invention, the present invention provides a multilayer body in which the biaxially oriented polyamide film is used for the outermost layer without stacking a biaxially oriented polyester film typified by a polyethylene terephthalate film.

The above-described multilayer body is suitably used as a packaging material. Specifically, the multilayer body is preferably used for packaging bags which are used for foods and drinks and are to be subjected to retort treatment.

The above-described multilayer body may have a printed layer stacked therein. As a printing ink for forming the printed layer, an aqueous or solvent-based resin-containing printing ink can be preferably used. Examples of the resin used for the printing ink include acrylic resins, urethane-based resins, polyester-based resins, vinyl-chloride-based resins, vinyl acetate copolymer resins, and mixtures thereof. The printing ink may contain known additives such as an antistatic agent, a light-blocking agent, an ultraviolet absorber, a plasticizer, a lubricant, a filler, a colorant, a stabilizer, a lubricating agent, a defoamer, a crosslinking agent, an anti-blocking agent, and an antioxidant.

A printing method for forming the printed layer is not particularly limited, and a known printing method such as an offset printing method, a gravure printing method, and a screen printing method can be used. For drying the solvent after the printing, a known drying method such as a hot air-drying method, a thermal roll drying method, and an infrared drying method can be used.

The present invention further provides a multilayer body in which a gas barrier layer such as an inorganic thin film layer or metal foil is disposed at the biaxially oriented polyamide film.

The inorganic thin film layer is a thin film formed of a metal or an inorganic oxide. The material forming the inorganic thin film layer is not particularly limited as long as the thin film can be formed of the material. Preferable examples of the material include aluminum, and inorganic oxides such as silicon oxide (silica), aluminum oxide (alumina), and mixtures of silicon oxide and aluminum oxide from the viewpoint of gas barrier properties. Particularly, a composite oxide of silicon oxide and aluminum oxide is preferable from the viewpoint of achieving both flexibility and denseness of the thin film layer.

In the composite oxide, as a mixing ratio between silicon oxide and aluminum oxide, a ratio of Al preferably ranges from 20 to 70% in terms of mass ratio of metal contents. In a case where the ratio of Al is 70% or less, the inorganic thin film layer can be made flexible, and gas barrier properties can be inhibited from being degraded due to the thin film being broken in a secondary process such as printing and lamination. In the description herein, the silicon oxide represents various silicon oxides such as SiO and $SiO_2$, or mixtures thereof, and the aluminum oxide represents various aluminum oxides such as AlO and $AL_2O_3$, or mixtures thereof.

The film thickness of the inorganic thin film layer is 1 to 100 nm in general, and preferably 5 to 50 nm. In a case where the film thickness of the inorganic thin film layer is 1 nm or less, more satisfactory gas barrier properties are likely to be obtained. Meanwhile, the thickness of 100 nm or less is advantageous from the viewpoint of bending resistance and production cost.

A method for forming the inorganic thin film layer is not particularly limited. For example, a known vapor deposition method, the examples of which include physical vapor deposition methods (PVD methods) such as a vacuum vapor deposition method, a sputtering method, and an ion plating method, and chemical vapor deposition methods (CVD methods), can be adopted as appropriate. A typical method for forming the inorganic thin film layer will be described below by using a silicon oxide/aluminum oxide-based thin film as an example. For example, in a case where a vacuum vapor deposition method is adopted, a mixture of $SiO_2$ and $Al_2O_3$, a mixture of $SiO_2$ and Al, or the like is preferably used as a vapor deposition raw material. Particles are used as the vapor deposition raw material in general. In this case, the size of each particle is desirably a size that does not change the pressure during vapor deposition, and the particle size is preferably 1 to 5 mm. For heating, systems such as resistive heating, high frequency induction heating, electron beam heating, and laser heating can be adopted. It is also possible to adopt reactive vapor deposition in which oxygen, nitrogen, hydrogen, argon, carbon dioxide gas, water vapor, or the like is introduced as a reaction gas or a means such as ozone addition or ion assist is used. Furthermore, a film formation condition such as biasing a body to be vapor-deposited (multilayer film to be vapor-deposited) and heating or cooling the body to be vapor-deposited can also be discretiona.rily changed. Similarly, the vapor deposition materials, reaction gases, biasing of the body to be vapor-deposited, heating/-cooling, and the like can be changed also when a sputtering method or a CVD method is adopted. Furthermore, a printed layer may be stacked on the inorganic thin film layer.

In a case where the inorganic thin film layer is provided at the biaxially oriented polyamide film of the present invention, a protective layer is preferably disposed on the inorganic thin film layer. The gas barrier layer formed of metal oxide is not a completely dense film, and minute defect portions are dotted. By applying a specific resin composition for the protective layer as described below onto the metal oxide layer to form the protective layer, resin in the protective phase solvent resin composition permeates into the defect portions of the metal oxide layer, so that an effect of stabilizing the gas barrier properties is obtained. In addition, by using a material having gas barrier properties also for the protective layer itself, the gas barrier performance of the multilayer film may also be significantly enhanced.

The protective layer is, for example, a layer in which an epoxy-based, an isocyanate-based, or a melamine-based curing agent, or the like is added to a urethane-based, a polyester-based, an acryl-based, a titanium-based, an isocyanate-based, an imine-based, or a polybutadiene-based resin, or the like. Examples of a solvent used for forming the protective layer include aromatic solvents such as benzene and toluene; alcohol-based solvents such as methanol and ethanol; ketone-based solvents such as acetone and methyl ethyl ketone; ester-based solvents such as ethyl acetate and butyl acetate; and polyhydric alcohol derivatives such as ethylene glycol monomethyl ether.

As the metal foil used for the gas barrier layer, various metal foils such as aluminum foil and stainless steel foil can be used, and aluminum foil is preferable from the viewpoint of moisture resistance, processability such as extendability, and cost. As aluminum foil, standard soft aluminum foils can be used. Among them, aluminum foil containing iron is preferable from the viewpoint of excellent pinhole resistance and excellent extendability during molding. A content of iron in aluminum foil (100 mass%) containing iron is preferably 0.1 to 9.0 mass% and more preferably 0.5 to 2.0 mass%. In a case where the content of the iron is the lower limit value or more, pinhole resistance and extendability are excellent. In a case where the content of the iron is 9.0 mass% or less, flexibility is excellent. The thickness of the metal foil is preferably 9 to 200 $\mu$m and more preferably 15 to 100 $\mu$m from the viewpoint of barrier properties, pinhole resistance, and processability.

A layer formed of another material may be stacked at the multilayer body of the present invention. For example, a method in which the biaxially oriented polyamide film and a biaxially oriented polyester film are adhered after film formation, or a method in which these films are adhered during film formation, can be adopted.

The present invention further provides a multilayer body that includes a heat-sealable resin layer (also referred to as sealant layer) called a sealant, in addition to the biaxially oriented polyamide film and the gas barrier layer. The multilayer body can be suitably used as a packaging material for cold forming. According to another mode of the present invention, the present invention provides a heat-sealable resin layer (also referred to as sealant layer) called a sealant, in addition to a biaxially oriented polyester film, the biaxially oriented polyamide film, and the gas barrier layer. The sealant layer is formed by using an extrusion lamination method or a dry lamination method in general.

Examples of the sealant layer include a resin film formed of a polyolefin-based resin, or an acid-modified polyolefin-based resin obtained by graft-modifying polyolefin-based resin with acid such as maleic anhydride. Examples of the polyolefin-based resin include low-density, medium-density, and high-density polyethylenes; ethylene-$\alpha$ olefin copolymers; homo-, block- and random-polypropylenes; and propylene-$\alpha$ olefin copolymers. One of these polyolefin-based resins may be used alone, or two or more of them may be used in combination.

The sealant layer may be a monolayer film or a multilayer film, and may be selected according to the required function. For example, a multilayer film that includes therein resin such as an ethylene-cyclic olefin copolymer or polymethylpentene can be used in order to impart moisture resistance. In the sealant layer, various additives such as a flame retardant, a slipping agent, an anti-blocking agent, an antioxidant, a light stabilizer, and a tackifier may be blended. The thickness of the sealant layer is preferably 10 to 100 $\mu$m and more preferably 20 to 60 $\mu$m.

The multilayer body of the present invention can also have a structure in which the adhesive layer, the printed layer, or the like is disposed between the biaxially oriented polyamide film and a biaxially oriented polyester film, between the biaxially oriented polyamide film and the gas barrier layer, between a biaxially oriented polyester film and the gas barrier layer, and/or between the gas barrier layer and the sealant layer.

The present invention provides a battery outer package material that includes the multilayer body having the biaxially oriented polyamide film, the gas barrier layer, and the sealant layer. According to another mode, the present invention provides a battery outer package material that includes the multilayer body having a biaxially oriented polyester film, the biaxially oriented polyamide film, the gas barrier layer, and the sealant layer. Particularly, the present invention is suitably used for a battery outer package material for a laminate-type lithium ion battery. According to still another mode, the present invention provides a material for medicine packaging.

EXAMPLES

The film and the multilayer body were evaluated by the following measurement methods. Unless otherwise specified, the measurement was performed in a measurement room in an environment of 23°C and a relative humidity of 65%.

[Thickness of film]

The thickness was measured by using a dial gauge in accordance with the A method of JIS K7130-1999.

[Biomass degree (%)]

The biomass degree was measured by performing radiocarbon (C14) measurement indicated in the Method B (AMS) of ASTM D6866-18.

[Heat shrinkage rate of film]

The heat shrinkage rate was measured by a dimensional change testing method based on JIS-C-2318 except that the test temperature was 160°C and the heating time was ten minutes. A sample was cut out in each of the MD direction and the TD direction, and the measurement was performed.

[Piercing strength]

The piercing strength was measured in accordance with "2. Testing methods for strength, etc." in "Standards for Food, Additives, etc. Chapter III: Apparatus and Containers and Packaging" (Notification No. 20 of the Ministry of Health and Welfare, 1982) in the Food Sanitation Act. A needle having a tip radius of 0.5 mm was caused to pierce the film at a piercing speed of 50 mm/minute, and a value obtained by dividing the strength (N) obtained when the needle penetrated through the film by the thickness ($\mu$m) of the film was set as the piercing strength. The measurement was performed at a normal temperature (23°C). The unit was **N/$\mu$m**.

[Piercing strength after retort treatment]

Retort treatment in which the obtained film was held in pressurized hot water having a temperature of 115°C was performed for 30 minutes, a water content adhered to the surface of the sample was thereafter wiped, and the sample was left as it was for 24 hours in an environment of a temperature of 23°C and a relative humidity of 50%. After that, for the sample, the piercing strength after the retort treatment was measured by the same method as the above-described piercing strength measurement method. The unit was **N/$\mu$m**.

[Strength and elongation of biaxially oriented film]

A test sample was cut out in the film MD direction so as to have a width of 15 mm and a length of 100 mm in accordance with JIS K 7127. A tensile test for the test sample was performed by using a tensile tester (AUTOGRAPH AG-I manufactured by SHIMADZU CORPORATION) under conditions that a gauge length was 50 mm and a tensile rate was 200 mm/min. A stress value (F3) at 3% deformation of the test sample and a stress value (F30 value) at 30% deformation of the test sample were calculated according to the obtained stress-strain curve.

[Stress attenuation rate of biaxially oriented film]

A test sample was cut out in the film MD direction so as to have a width of 15 mm and a length of 100 mm. A 50% tensile strain was applied by using a tensile tester (AUTOGRAPH AG-I manufactured by SHIMADZU CORPORATION) under conditions that a gauge length was 50 mm and a tensile rate was 200 mm/min, and the tensile strain was held from a time when the 50% tensile strain was applied to elapse of 100 seconds, and the change in the stress during the period was recorded.
The stress values from a time immediately after the 50% strain was applied to elapse of two seconds in a state where the strain was held were read from the obtained holding time-stress graph, and the stress attenuation rate after the strain was held for two seconds was obtained according to the following Formula (1).

$$\text{stress attenuation rate (\%) after the strain was held for two seconds} = 100 \times (\sigma0 - \sigma1)/\sigma0 \qquad \text{Formula (1)}$$

In the formula, $\sigma0$ represents a tensile stress of the film, which was obtained immediately after the 50% tensile strain was applied to the film by applying a tensile force at the tensile rate of 200 mm/min, and $\sigma1$ represents a stress value obtained when the 50% tensile strain was held for two seconds from $\sigma0$.

[Cold formability]

A biaxially oriented polyester film (E5102 manufactured by TOYOBO Co., Ltd., the thickness was 12 $\mu$m), the biaxially oriented polyamide film, aluminum foil (8079 material, the thickness was 40 $\mu$m), and an unstretched polypropylene film (P1146 manufactured by TOYOBO Co., Ltd., the thickness was 70 $\mu$m) as a sealant layer were dry-laminated by using a urethane-based adhesive (dry laminate adhesive manufactured by Toyo-Morton, Ltd., a blending ratio among TM-509, CAT10L, and ethyl acetate was 33.6:4.0:62.4 (mass ratio)), and a multilayer body in which the biaxially oriented polyester film//the biaxially oriented polyamide film//the aluminum foil//the sealant layer were stacked in this order, was produced. The obtained multilayer body was set at a die set mold (90 mm×50 mm projection shape), and draw-forming was performed by applying pressure to the multilayer body at 23°C with use of a pressing machine. The draw depth at the forming was increased in units of 0.2 mm, and the maximum depth at which breakage of the multilayer body was not caused was set as the draw depth. The evaluation was made according to the following criteria.

A: The draw depth was 8 mm or more.
B: The draw depth was 6 mm or more and less than 8 mm.

C: The draw depth was 4 mm or more and less than 6 mm.
D: The draw depth was less than 4 mm.

[Springback after forming]

The above-described multilayer body was set at a die set mold (90 mm×50 mm projection shape), and draw-forming was performed by applying pressure to the multilayer body at 23°C with use of a pressing machine. In the draw-forming, the rate at which the multilayer body was pressed into the mold was 200 mm/min, and the holding time after the pressing was two seconds. The depth of the container was measured after the mold was removed, and the retention rate (ratio between the depth of the container and the forming depth) was calculated. The evaluation was made according to the following criteria.

A: The retention rate was 90% or more.
B: The retention rate was 80% or more and less than 90%.
C: The retention rate was 70% or more and less than 80%.
D: The retention rate was less than 70%.

[Curling after forming]

A sample which was able to be formed without being broken in the cold formability evaluation was placed on a level table such that the projection of the sample was on the upper side. The average value of heights by which four corners of the formed test piece were raised from the table as an originating point was set as the warp height average value, and the evaluation was made according to the following criteria.

A: The warp height average value was less than 3 mm.
B: The warp height average value was 3 mm or more and less than 5 mm.
C: The warp height average value was 5 mm or more and less than 10 mm.
D: The warp height average value was 10 mm or more.

[Example 1]

A raw material in which 85 parts by weight of polyamide 6 (manufactured by TOYOBO Co., Ltd., the relative viscosity was 2.8, the melting point was 220°C), 15 parts by weight of polyamide 11 (manufactured by ARKEMA, the relative viscosity was 2.5, the melting point was 186°C, the biomass degree was 100%), 0.45 parts by weight of porous silica particulates (manufactured by FUJI SILYSIA CHEMICAL LTD., the average particle diameter was 2.0 $\mu$m, the pore volume was 1.6 ml/g), and 0.15 parts by weight of fatty acid bisamide (ethylene bis stearamide manufactured by Kyoeisha Chemical Co., Ltd.) were blended, was extruded as a melted film by an extruder through a T-die at a temperature of 260°C after a water content was adjusted to 0.1 mass%, and the melted film was electrostatically brought into close contact onto a metal roll having been cooled to 30°C by applying a DC high voltage, and cooled and solidified, to obtain an unstretched film having a thickness of 200 $\mu$m.
By using a roll stretching machine, the unstretched film was stretched 1.03 times at a stretching temperature of 80°C in the first stage of the MD preliminary stretching, and subsequently stretched 1.03 times at a stretching temperature of 80°C in the second stage of the MD preliminary stretching. Subsequently, the film was stretched 2.1 times at 85°C in the first stage of the MD main stretching, and further stretched 1.53 times at a stretching temperature of 70°C in the second stage of the MD main stretching. The MD stretched film was sequentially guided to a tenter, and stretched 4.0 times at 130°C in the TD direction, and thereafter heat-set at 210°C, and was further subjected to 5.0% relaxation at 210°C in the TD direction. Subsequently, the film was cooled at 100°C, and one surface of the film was subjected to corona treatment, and thereafter, tenter-clip-held portions at both ends were each trimmed over a width of 150 mm, to obtain a biaxially oriented polyamide film having a thickness of 15 $\mu$m. The characteristics of the obtained film were evaluated. Table 1 indicates the evaluation results.

[Examples 2 to 6]

As indicated in Table 1, polyamide films were each obtained in the same manner as in Example 1 except that a blending ratio between polyamide 6 and polyamide 11, the temperature and the ratio for the MD preliminary stretching, and the ratio for MD main stretching were changed.

[Example 7]

A raw material in which 85 parts by weight of polyamide 6 (manufactured by TOYOBO Co., Ltd., the relative viscosity was 2.8, the melting point was 220°C), 15 parts by weight of polyamide 11 (manufactured by ARKEMA, the relative viscosity was 2.5, the melting point was 186°C, the biomass degree was 100%), 0.45 parts by weight of porous silica particulates (manufactured by FUJI SILYSIA CHEMICAL LTD., the average particle diameter was 2.0 $\mu$m, the pore volume was 1.6 ml/g), and 0.15 parts by weight of fatty acid bisamide (ethylene bis stearamide manufactured by Kyoeisha Chemical Co., Ltd.) were blended, was extruded as a melted film by an extruder through a T-die at a temperature of 260°C after a water content was adjusted to 0.1 mass%, and the melted film was electrostatically brought into close contact onto a metal roll having been cooled to 30°C by applying a DC high voltage, and cooled and solidified, to obtain an unstretched film having a thickness of 200 $\mu$m.

By using a roll stretching machine, the unstretched film was stretched 1.07 times at a stretching temperature of 85°C in the MD preliminary stretching, subsequently stretched 2.0 times at 85°C in the first stage of the MD main stretching, and further stretched 2.0 times at a stretching temperature of 70°C in the second stage of the MD main stretching. Immediately after the film was subjected to the MD stretching, the film was caused to pass through a heating oven having been set to 85°C by a hot air heater, and was subjected to 5.0% relaxation in the MD direction by using difference in speed between a roll at an inlet of the heating oven and a roll at an outlet thereof. The MD stretched film was sequentially guided to a tenter, and stretched 4.0 times at 130°C in the TD direction, and thereafter heat-set at 210°C, and was further subjected to 5.0% relaxation at 210°C in the TD direction. Subsequently, the film was cooled at 100°C, and one surface of the film was subjected to corona treatment, and thereafter, tenter-clip-held portions at both ends were each trimmed over a width of 150 mm, to obtain a biaxially oriented polyamide film having a thickness of 15 $\mu$m. The characteristics of the obtained film were evaluated. Table 1 indicates the evaluation results.

[Example 8]

A raw material in which 85 parts by weight of polyamide 6 (manufactured by TOYOBO Co., Ltd., the relative viscosity was 2.8, the melting point was 220°C), 15 parts by weight of polyamide 11 (manufactured by ARKEMA, the relative viscosity was 2.5, the melting point was 186°C, the biomass degree was 100%), 0.45 parts by weight of porous silica particulates (manufactured by FUJI SILYSIA CHEMICAL LTD., the average particle diameter was 2.0 $\mu$m, the pore volume was 1.6 ml/g), and 0.15 parts by weight of fatty acid bisamide (ethylene bis stearamide manufactured by Kyoeisha Chemical Co., Ltd.) were blended, was extruded as a melted film by an extruder through a T-die at a temperature of 260°C after a water content was adjusted to 0.1 mass%, and the melted film was electrostatically brought into close contact onto a metal roll having been cooled to 30°C by applying a DC high voltage, and cooled and solidified, to obtain an unstretched film having a thickness of 200 $\mu$m.

By using a roll stretching machine, the unstretched film was stretched 1.03 times at a stretching temperature of 80°C in the first stage of the MD preliminary stretching, and subsequently stretched 1.03 times at a stretching temperature of 80°C in the second stage of the MD preliminary stretching. Subsequently, the film was stretched 2.1 times at 85°C in the first stage of the MD main stretching, and further stretched 1.53 times at a stretching temperature of 70°C in the second stage of the MD main stretching. The MD stretched film was sequentially guided to a tenter. The stretching method at the tenter was changed to three-stage stretching, and a 1 m fixed length region was provided between the first stage and the second stage, and between the second stage and the third stage, and the film was stretched in the TD direction. Thereafter, the film was heat-set at 210°C, and was further subjected to 5.0% relaxation at 210°C in the TD direction. Subsequently, the film was cooled at 100°C, and one surface of the film was subjected to corona treatment, and thereafter, the tenter-clip-held portions at both ends were each trimmed over a width of 150 mm, to obtain a biaxially oriented polyamide film having a thickness of 15 $\mu$m. The characteristics of the obtained film were evaluated. Table 1 indicates the evaluation results.

[Examples 9 to 14]

Biaxially oriented polyamide films were obtained in the same manner as in Example 1 except that the following polyamide 410, polyamide 610, and polyamide 1010 as polyamide resins derived from biomass, and polyamide 6 were used.

Polyamide 410: (manufactured by DSM, the relative viscosity was 3.0, the melting point was 250°C, the biomass degree was 70%)

Polyamide 610: (manufactured by ARKEMA, the relative viscosity was 2.7, the melting point was 222°C, the biomass degree was 61%)

Polyamide 1010: (manufactured by ARKEMA, the relative viscosity was 2.8, the melting point was 202°C, the biomass degree was 98%)

Table 1 indicates the evaluation results of the obtained biaxially oriented polyamide films.

[Example 15]

A biaxially oriented polyamide film was obtained in the same manner as in Example 1 except that the thickness of the unstretched film was changed such that the final film thickness was 25 $\mu$m. Table 1 indicates the evaluation results of the obtained biaxially oriented polyamide film.

[Example 16]

A biaxially oriented polyamide film was obtained in the same manner as in Example 3 except that the thickness of the unstretched film was changed such that the final film thickness was 25 $\mu$m. Table 1 indicates the evaluation results of the obtained biaxially oriented polyamide film.

[Table 1A]

| | | | | Example 1 | Example 2 | Example 3 | Example 4 | Example 5 | Example 6 | Example 7 | Example 8 |
|---|---|---|---|---|---|---|---|---|---|---|---|
| Raw material composition | Polyamide 6 | | part by mass | 85 | 50 | 5 | 85 | 85 | 85 | 85 | 85 |
| | Polyamide 11 | | part by mass | 15 | 50 | 95 | 15 | 95 | 15 | 15 | 15 |
| | Polyamide 410 | | part by mass | - | - | - | - | - | - | - | - |
| | Polyamide 610 | | part by mass | - | - | - | - | - | - | - | - |
| | Polyamide 1010 | | part by mass | - | - | - | - | - | - | - | - |
| | Particulate | | part by mass | 0.45 | 0.45 | 0.45 | 0.45 | 0.45 | 0.45 | 0.45 | 0.45 |
| | Fatty acid amide | | part by mass | 0.15 | 0.15 | 0.15 | 0.15 | 0.15 | 0.15 | 0.15 | 0.15 |
| MD stretching process | First stage of preliminary stretching | Temperature | °C | 80 | 80 | 80 | 85 | 85 | 85 | 85 | 80 |
| | | Ratio | times | 1.03 | 1.03 | 1.03 | 1.03 | 1.03 | 1.07 | 1.07 | 1.03 |
| | Second stage of preliminary stretching | Temperature | °C | 80 | 80 | 80 | 85 | 85 | - | - | 80 |
| | | Ratio | times | 1.03 | 1.03 | 1.03 | 1.03 | 1.03 | - | - | 1.03 |
| | First stage of main stretching | Temperature | °C | 85 | 85 | 85 | 85 | 85 | 85 | 85 | 85 |
| | | Ratio | times | 2.10 | 2.10 | 2.10 | 2.10 | 2.10 | 2.00 | 2.00 | 2.10 |
| | Second stage of main stretching | Temperature | °C | 70 | 70 | 70 | 70 | 70 | 70 | 70 | 70 |
| | | Ratio | times | 1.53 | 1.53 | 1.53 | 1.70 | 1.70 | 1.45 | 2.00 | 1.53 |
| | Relaxation rate | | % | - | - | - | - | - | - | 5.0 | - |
| | Total stretching ratio | | times | 3.4 | 3.4 | 3.4 | 3.8 | 3.8 | 3.1 | 4.0 | 3.4 |

(continued)

| | | | | Example 1 | Example 2 | Example 3 | Example 4 | Example 5 | Example 6 | Example 7 | Example 8 |
|---|---|---|---|---|---|---|---|---|---|---|---|
| TD stretch-ing process | First stage | Temperature | °C | 130 | 130 | 130 | 130 | 130 | 130 | 130 | 130 |
| | | Ratio | - | 4.0 | 4.0 | 4.0 | 4.0 | 4.0 | 4.0 | 4.0 | 1.2 |
| | Second stage | Temperature | °C | - | - | - | - | - | - | - | 130 |
| | | Ratio | - | - | - | - | - | - | - | - | 1.3 |
| | Third stage | Temperature | °C | - | - | - | - | - | - | - | 130 |
| | | Ratio | - | - | - | - | - | - | - | - | 1.5 |
| | Heat-setting temperature | Temperature | °C | 210 | 210 | 210 | 210 | 210 | 210 | 210 | 210 |
| | Relaxation rate | | % | 50 | 5.0 | 5.0 | 5.0 | 5.0 | 5.0 | 50 | 50 |
| Thickness | | | $\mu$m | 15 | 15 | 15 | 15 | 15 | 15 | 15 | 15 |
| Biomass degree | | | % | 15 | 49 | 93 | 15 | 93 | 15 | 15 | 15 |
| Piercing strength | Before treat-ment | | N/$\mu$m | 0.80 | 0.82 | 0.85 | 0.82 | 0.85 | 0.78 | 0.85 | 0.81 |
| | After retort treatment | | N/$\mu$m | 0.41 | 0.62 | 0.82 | 0.42 | 0.82 | 0.40 | 0.43 | 0.41 |
| Heat shrinkage rate | MD | | % | 1.3 | 1.4 | 1.5 | 1.4 | 1.6 | 1.0 | 1.3 | 1.2 |
| | TD | | % | 1.6 | 1.7 | 1.8 | 1.6 | 1.7 | 1.3 | 1.5 | 1.2 |
| Stress attenuation rate | MD | | % | 18.1 | 18 | 17.8 | 14.1 | 13.9 | 20.2 | 14.2 | 18.1 |
| | TD | | % | 13.7 | 13.5 | 13.2 | 13.7 | 13.8 | 13.8 | 13.7 | 15.1 |
| X: F3 | MD | | MPa | 78 | 78 | 78 | 76 | 74 | 79 | 75 | 78 |
| | TD | | MPa | 58 | 58 | 57 | 59 | 59 | 58 | 58 | 57 |
| Y:F30 | MD | | MPa | 122 | 124 | 126 | 141 | 148 | 113 | 143 | 121 |
| | TD | | MPa | 188 | 189 | 191 | 187 | 187 | 186 | 187 | 188 |
| Z: F30/F3 | MD | | - | 1.6 | 1.6 | 1.6 | 1.9 | 2.0 | 1.4 | 1.9 | 1.5 |
| | TD | | - | 3.2 | 3.3 | 3.3 | 3.2 | 3.2 | 3.2 | 3.2 | 3.3 |
| Cold formability | | | | B | B | B | A | A | B | A | B |

(continued)

| | Example 1 | Example 2 | Example 3 | Example 4 | Example 5 | Example 6 | Example 7 | Example 8 |
|---|---|---|---|---|---|---|---|---|
| Springback after forming | B | B | B | B | B | A | B | B |
| Curling after forming | B | B | B | B | B | A | B | B |

| | | | | Example 9 | Example 10 | Example 11 | Example 12 | Example 13 | Example 14 | Example 15 | Example 16 |
|---|---|---|---|---|---|---|---|---|---|---|---|
| Raw material composition | Polyamide 6 | | part by mass | 85 | 5 | 83 | 5 | 85 | 5 | 85 | 5 |
| | Polyamide 11 | | part by mass | - | - | - | - | - | - | 15 | 95 |
| | Polyamide 410 | | part by mass | 15 | 95 | - | - | - | - | - | - |
| | Polyamide 610 | | part by mass | - | - | 17 | 95 | - | - | - | - |
| | Polyamide 1010 | | part by mass | - | - | - | - | 15 | 95 | - | - |
| | Particulate | | part by mass | 0.45 | 0.45 | 0.45 | 0.45 | 0.45 | 0.45 | 0.45 | 0.45 |
| | Fatty acid amide | | part by mass | 0.15 | 0.15 | 0.15 | 0.15 | 0.15 | 0.15 | 0.15 | 0.15 |
| MD stretching process | First stage of preliminary stretching | Temperature | °C | 80 | 80 | 80 | 80 | 80 | 80 | 80 | 80 |
| | | Ratio | times | 1.03 | 1.03 | 1.03 | 1.03 | 1.03 | 1.03 | 1.03 | 1.03 |
| | Second stage of preliminary stretching | Temperature | °C | 80 | 80 | 80 | 80 | 80 | 80 | 80 | 80 |
| | | Ratio | times | 1.03 | 1.03 | 1.03 | 1.03 | 1.03 | 1.03 | 1.03 | 1.03 |
| | First stage of main stretching | Temperature | °C | 85 | 85 | 85 | 85 | 85 | 85 | 85 | 85 |
| | | Ratio | times | 2.10 | 2.10 | 2.10 | 2.10 | 2.10 | 2.10 | 2.10 | 2.10 |
| | Second stage of main stretching | Temperature | °C | 70 | 70 | 70 | 70 | 70 | 70 | 70 | 70 |
| | | Ratio | times | 1.53 | 1.53 | 1.53 | 1.53 | 1.53 | 1.53 | 1.53 | 1.53 |
| | Relaxation rate | | % | | | | | | | | |
| | Total stretching ratio | | times | 3.4 | 3.4 | 3.4 | 3.4 | 3.4 | 3.4 | 3.4 | 3.4 |

(continued)

| | | | | Example 9 | Example 10 | Example 11 | Example 12 | Example 13 | Example 14 | Example 15 | Example 16 |
|---|---|---|---|---|---|---|---|---|---|---|---|
| TD stretch-ing process | First stage | Temperature | °C | 130 | 130 | 130 | 130 | 130 | 130 | 130 | 130 |
| | | Ratio | - | 4.0 | 4.0 | 4.0 | 4.0 | 4.0 | 4.0 | 4.0 | 4.0 |
| | Second stage | Temperature | °C | - | - | - | - | - | - | - | - |
| | | Ratio | - | - | - | - | - | - | - | - | - |
| | Third stage | Temperature | °C | - | - | - | - | - | - | - | - |
| | | Ratio | - | - | - | - | - | - | - | - | - |
| | Heat-setting temperature | Temperature | °C | 210 | 210 | 210 | 210 | 210 | 210 | 210 | 210 |
| | Relaxation rate | | % | 5.0 | 5.0 | 5.0 | 5.0 | 5.0 | 5.0 | 5.0 | 5.0 |
| Thickness | | | μm | 15 | 15 | 15 | 15 | 15 | 15 | 25 | 25 |
| Biomass degree | | | % | 11 | 67 | 10 | 58 | 15 | 93 | 15 | 93 |
| Piercing strength | Before treat-ment | | N/μm | 0.81 | 0.84 | 0.82 | 0.84 | 0.81 | 0.84 | 0.80 | 0.85 |
| | After retort treatment | | N/μm | 0.41 | 0.81 | 0.42 | 0.81 | 0.41 | 0.81 | 0.41 | 0.82 |
| Heat shrinkage rate | MD | | % | 1.3 | 1.5 | 1.2 | 1.4 | 1.3 | 1.4 | 1.3 | 1.5 |
| | TD | | % | 1.7 | 1.7 | 1.6 | 1.5 | 1.5 | 1.5 | 1.6 | 1.8 |
| Stress attenuation rate | MD | | % | 18.2 | 17.8 | 18.1 | 17.7 | 18.0 | 17.6 | 18.1 | 17.8 |
| | TD | | % | 13.6 | 13.1 | 13.8 | 13.2 | 13.6 | 13.3 | 13.7 | 13.2 |
| X: F3 | MD | | MPa | 78 | 78 | 78 | 78 | 78 | 78 | 78 | 78 |
| | TD | | MPa | 58 | 57 | 58 | 57 | 58 | 57 | 58 | 57 |
| Y: F30 | MD | | MPa | 122 | 126 | 122 | 126 | 122 | 126 | 122 | 126 |
| | TD | | MPa | 189 | 191 | 189 | 190 | 189 | 189 | 188 | 191 |
| Z: F30/F3 | MD | | - | 1.6 | 1.6 | 1.6 | 1.6 | 1.6 | 1.6 | 1.6 | 1.6 |
| | TD | | - | 3.3 | 3.3 | 3.3 | 3.3 | 3.3 | 3.3 | 3.2 | 3.3 |
| Cold formability | | | | B | B | B | B | B | B | B | B |

(continued)

|  | Example 9 | Example 10 | Example 11 | Example 12 | Example 13 | Example 14 | Example 15 | Example 16 |
|---|---|---|---|---|---|---|---|---|
| Springback after forming | B | B | B | B | B | B | B | B |
| Curling after forming | B | B | B | B | B | B | B | B |

[Comparative examples 1 to 2]

As indicated in Table 2, biaxially oriented polyamide films were obtained in the same manner as in Example 1 except that a blending ratio between polyamide 6 and polyamide 11 was changed. Table 2 indicates the evaluation results of the obtained biaxially oriented polyamide films.

[Comparative examples 3 to 5]

Biaxially oriented polyamide films were obtained in the same manner as in Example 1 except that the MD preliminary stretching was not performed, and the first stage and the second stage of the MD main stretching were performed at temperatures and ratios indicated in Table 2. Table 2 indicates the evaluation results of the obtained biaxially oriented polyamide films.

[Comparative examples 6 to 9]

Biaxially oriented polyamide films were obtained in the same manner as in Example 1 except that the MD preliminary stretching was not performed, the first stage and the second stage of the MD main stretching were performed at temperatures and ratios indicated in Table 2, and the heat-setting temperatures and the relaxation rates after the TD direction stretching were changed to the temperatures indicated in Table 2. Table 2 indicates the evaluation results of the obtained biaxially oriented polyamide films.

[Comparative example 10]

A biaxially oriented polyamide film was obtained in the same manner as in Example 1 except that the MD preliminary stretching was not performed, and only one stage of the MD main stretching was performed at the temperature and ratio indicated in Table 2. Table 2 indicates the evaluation results of the obtained biaxially oriented polyamide film.

[Table 2A]

| | | | | Comparative Example 1 | Comparative Example 2 | Comparative Example 3 | Comparative Example 4 | Comparative Example 5 |
|---|---|---|---|---|---|---|---|---|
| Raw material composition | Polyamide 6 | | part by mass | 100 | 95 | 85 | 85 | 85 |
| | Polyamide 11 | | part by mass | 0 | 8 | 15 | 15 | 15 |
| | Polyamide 410 | | part by mass | - | - | - | - | - |
| | Polyamide 610 | | part by mass | - | - | - | - | - |
| | Polyamide 1010 | | part by mass | - | - | - | - | - |
| | Particulate | | part by mass | 0.45 | 0.45 | 0.45 | 0.45 | 0.45 |
| | Fatty acid amide | | part by mass | 0.15 | 0.15 | 0.15 | 0.15 | 0.15 |
| MD stretching process | First stage of preliminary stretching | Temperature | °C | 80 | 80 | - | - | - |
| | | Ratio | times | 1.03 | 1.03 | - | - | - |
| | Second stage of preliminary stretching | Temperature | °C | 80 | 80 | - | - | - |
| | | Ratio | times | 1.03 | 1.03 | - | - | - |
| | First stage of main stretching | Temperature | °C | 85 | 85 | 75 | 80 | 80 |
| | | Ratio | times | 2.10 | 2.10 | 1.70 | 200 | 1.70 |
| | Second stage of main stretching | Temperature | °C | 70 | 70 | 70 | 70 | 65 |
| | | Ratio | times | 1.53 | 1.53 | 2.00 | 2.00 | 1.53 |
| | Relaxation rate | | % | | | | | |
| | Total stretching ratio | | times | 3.4 | 3.4 | 3.4 | 4.0 | 2.6 |
| TD stretching process | First stage | Temperature | °C | 130 | 130 | 130 | 130 | 130 |
| | | Ratio | | 4.0 | 4.0 | 4.0 | 4.0 | 4.0 |
| | Second stage | Temperature | °C | - | - | - | - | - |
| | | Ratio | - | - | - | - | - | - |
| | Third stage | Temperature | °C | - | - | - | - | - |
| | | Ratio | - | - | - | - | - | - |
| | Heat-setting temperature | Temperature | °C | 210 | 210 | 210 | 210 | 210 |
| | Relaxation rate | | % | 5.0 | 5.0 | 5.0 | 5.0 | 5.0 |
| Thickness | | | μm | 15 | 15 | 15 | 15 | 15 |

22

| | | | Comparative Example 1 | Comparative Example 2 | Comparative Example 3 | Comparative Example 4 | Comparative Example 5 |
|---|---|---|---|---|---|---|---|
| Biomass degree | | % | 0 | 8 | 15 | 15 | 15 |
| Piercing strength | Before treatment | N/μm | 0.80 | 0.81 | 0.81 | 0.83 | 0.78 |
| | After retort treatment | N/μm | 0.19 | 0.32 | 0.41 | 0.42 | 0.40 |
| Heat shrinkage rate | MD | % | 1.2 | 1.2 | 1.2 | 2.0 | 0.5 |
| | TD | % | 1.5 | 1.5 | 1.4 | 1.8 | 1.0 |
| Stress attention rate | MD | % | 18.2 | 18.2 | 11.5 | 9.8 | 21.5 |
| | TD | % | 13.8 | 13.8 | 13.7 | 13.8 | 13.8 |
| X: F3 | MD | MPa | 78 | 78 | 76 | 74 | 80 |
| | TD | MPa | 59 | 59 | 58 | 59 | 59 |
| Y: F30 | MD | MPa | 121 | 121 | 129 | 152 | 101 |
| | TD | MPa | 187 | 187 | 188 | 188 | 187 |
| Z: F30/F3 | MD | - | 1.5 | 1.5 | 1.7 | 2.1 | 1.3 |
| | TD | - | 3.2 | 3.2 | 3.2 | 3.2 | 3.2 |
| Cold formability | | | B | B | B | A | C |
| Springback after forming | | | B | B | C | D | B |
| Curling after forming | | | B | B | C | D | B |

[Table 2B]

| | | | Unit | Comparative Example 6 | Comparative Example 7 | Comparative Example 8 | Comparative Example 9 | Comparative Example 10 |
|---|---|---|---|---|---|---|---|---|
| Raw material composition | Polyamide 6 | | part by mass | 85 | 85 | 85 | 85 | 85 |
| | Polyamide 11 | | part by mass | 15 | 15 | 15 | 15 | 15 |
| | Polyamide 410 | | part by mass | - | - | - | - | - |
| | Polyamide 610 | | part by mass | - | - | - | - | - |
| | Polyamide 1010 | | part by mass | - | - | - | - | - |
| | Particulate | | part by mass | 0.45 | 0.45 | 0.45 | 0.45 | 0.45 |
| | Fatty acid amide | | part by mass | 0.15 | 0.15 | 0.15 | 0.15 | 0.15 |
| MD stretching process | First stage of preliminary stretching | Temperature | °C | - | - | - | - | - |
| | | Ratio | times | - | - | - | - | - |
| | Second stage of preliminary stretching | Temperature | °C | - | - | - | - | - |
| | | Ratio | times | - | - | - | - | - |
| | First stage of main stretching | Temperature | °C | 75 | 70 | 80 | 80 | 70 |
| | | Ratio | times | 1.70 | 1.70 | 1.70 | 1.70 | 3.40 |
| | Second stage of main stretching | Temperature | °C | 70 | 70 | 65 | 65 | |
| | | Ratio | times | 2.00 | 2.00 | 2.00 | 2.00 | |
| | Relaxation rate | | % | - | - | - | - | - |
| | Total stretching ratio | | times | 3.4 | 3.4 | 3.4 | 3.4 | 3.4 |
| TD stretching process | First stage | Temperature | °C | 130 | 130 | 130 | 130 | 130 |
| | | Ratio | - | 4.0 | 4.0 | 4.0 | 4.0 | 4.0 |
| | Second stage | Temperature | °C | - | - | - | - | - |
| | | Ratio | - | - | - | - | - | - |
| | Third stage | Temperature | °C | - | - | - | - | - |
| | | Ratio | - | - | - | - | - | - |
| | Heat-setting temperature | Temperature | °C | 195 | 215 | 210 | 210 | 210 |
| | Relaxation rate | | % | 5.0 | 5.0 | 15.0 | 1.0 | 5.0 |
| Thickness | | | µm | 15 | 15 | 15 | 15 | 15 |

(continued)

| | | | Comparative Example 6 | Comparative Example 7 | Comparative Example 8 | Comparative Example 9 | Comparative Example 10 |
|---|---|---|---|---|---|---|---|
| Biomass degree | | % | 15 | 15 | 15 | 15 | 15 |
| Piercing strength | Before treatment | N/μm | 0.83 | 0.71 | 0.75 | 0.82 | 0.81 |
| | After retort treatment | N/μm | 0.42 | 0.36 | 0.38 | 0.42 | 0.41 |
| Heat shrinkage rate | MD | % | 3.3 | 0.4 | 1.2 | 1.2 | 1.5 |
| | TD | % | 3.8 | 0.5 | 0.1 | 5.5 | 1.8 |
| Stress attenuation rate | MD | % | 9.5 | 9.7 | 11.3 | 11.4 | 10.8 |
| | TD | % | 10.9 | 14.5 | 10.2 | 15.2 | 13.8 |
| X: F3 | MD | MPa | 74 | 81 | 76 | 76 | 75 |
| | TD | MPa | 56 | 62 | 66 | 56 | 59 |
| Y: F30 | MD | MPa | 153 | 102 | 129 | 129 | 132 |
| | TD | MPa | 195 | 178 | 158 | 205 | 188 |
| Z: F30/F3 | MD | - | 2.1 | 1.3 | 1.7 | 1.7 | 1.7 |
| | TD | - | 3.5 | 2.9 | 2.4 | 3.7 | 3.2 |
| Cold formability | | | A | C | C | A | B |
| Springback after forming | | | D | A | B | C | C |
| Curling after forming | | | D | B | B | C | C |

As indicated in Table 1, the films of the examples maintained high values for piercing strength also after the retort treatment, and were excellent as films for packaging. Reduction of dimensional accuracy due to springback after forming was inhibited and warp resistance was excellent, and dimensional accuracy in forming was thus excellent. Furthermore, a content of raw materials derived from biomass was large. Therefore, contribution to reduction of load on the environment can also be expected.

In Comparative examples 1 and 2, formability was excellent and reduction of dimensional accuracy due to springback after forming was inhibited. However, few or no raw materials derived from biomass were used, and thus, contribution to reduction of load on the environment was small, and furthermore, reduction of strength after retort treatment was significant.

In Comparative example 3, since preliminary stretching was not performed in the MD stretching process, residual stress in the MD direction was high, and the stress attenuation rate was small, so that curling and springback after the forming were large. In Comparative example 4, the stretching ratio was excessively high in the MD stretching process, so that the residual stress was high, and curling and springback after the forming were large. In Comparative example 5, the stretching ratio was excessively low in the MD stretching process, so that the forming depth was not able to be made large, and formability was insufficient.

In Comparative example 6, since the heat-setting temperature was excessively low, although formability was good, shrinkage in the MD direction in the heating was large, and dimensional stability was poor, and furthermore, residual stress in the MD direction was not able to be sufficiently lowered at the film forming stage, so that curling and springback in the forming were large. In Comparative example 7, since the heat-setting temperature was excessively high, the film became brittle due to crystallization, so that piercing strength and piercing strength after the retort treatment indicated low values, and furthermore, formability was poor.

In Comparative example 8, since the relaxation rate in the TD direction was excessively high, formability was insufficient. In comparative example 9, since the relaxation rate in the TD direction was excessively low, residual stress in the TD direction was not able to be sufficiently lowered, and curling and springback in the forming were large.

In Comparative example 10, since stretching in the MD direction was performed by one-stage stretching, the orientation in the MD direction was excessively high, and residual stress of the film in the MD direction was not able to be sufficiently lowered, so that curling and springback in the forming were large.

## Claims

1. A biaxially oriented polyamide film comprising:

    5 mass% or more and 90 mass% or less of polyamide 6; and
    10 mass% or more and 95 mass% or less of polyamide resin derived from biomass, wherein
    a content of radiocarbon (C14) is 10% or more and 95% or less with respect to a total content of carbon,
    the biaxially oriented polyamide film has a piercing strength of 0.71 N/$\mu$m or more and 1.0 N/$\mu$m or less,
    the biaxially oriented polyamide film has a piercing strength of 0.40 N/$\mu$m or more after retort treatment is performed at 115°C for 30 minutes, and
    the biaxially oriented polyamide film has a heat shrinkage rate of 3.0% or less in each of an MD direction and a TD direction after being heated at 160°C for ten minutes.

2. The biaxially oriented polyamide film according to claim 1, wherein a stress attenuation rate indicated by the following Formula (1) is 12.0% or more in each of the MD direction and the TD direction in a tensile stress relaxation test at 25°C,

$$\text{Formula (1)} \quad \text{stress attenuation rate (\%)}=100\times(\sigma0-\sigma1)/\sigma0$$

in which $\sigma0$ represents a value of a tensile stress obtained immediately after a 50% tensile strain is applied to the film by applying a tensile force at a tensile rate of 200 mm/min, and $\sigma1$ represents a value of a tensile stress obtained when the 50% tensile strain is held for two seconds from $\sigma0$.

3. The biaxially oriented polyamide film according to claim 2, wherein, when X(MD) and X(TD) represent stresses at 3% elongation at 25°C in the MD direction and the TD direction, respectively, of the film, Y(MD) and Y(TD) represent stresses at 30% elongation at 25°C in the MD direction and the TD direction, respectively, of the film, and Z(MD) and Z(TD) represent values of Y(MD)/X(MD) and Y(MD)/X(MD), respectively, the following Formulas of (2) to (5) are all satisfied.

Formula (2) 100 MPa≤Y(MD)≤150 MPa

Formula (3) 110 MPa≤Y(TD)≤200 MPa

Formula (4) 1.4≤Z(MD)≤2.2

Formula (5) 2.5≤Z(TD)≤3.5

4. The polyamide film according to any one of claims 1 to 3, wherein the polyamide resin derived from biomass is one or more kinds of polyamide resins selected from the group consisting of polyamide 11, polyamide 410, polyamide 610, and polyamide 1010.

5. A multilayer body comprising:

   the biaxially oriented polyamide film according to any one of claims 1 to 4, an adhesive layer; and
   a sealant layer.

6. A multilayer body comprising:

   the biaxially oriented polyamide film according to any one of claims 1 to 4, a gas barrier layer; and
   a sealant layer.

7. The multilayer body according to claim 6, wherein the gas barrier layer includes metal foil.

8. A battery outer package material comprising the multilayer body according to claim 6 or 7.

[Fig. 1]

preheating zone

stretching 1 zone

stretching 2 zone

heat-setting zone

**EP 4 494 846 A1**

| | INTERNATIONAL SEARCH REPORT | International application No. |
| | | **PCT/JP2023/004182** |

**A. CLASSIFICATION OF SUBJECT MATTER**

*B29C 55/12*(2006.01)i; *B32B 27/34*(2006.01)i; *C08J 5/18*(2006.01)i; *B29K 77/00*(2006.01)n; *B29L 7/00*(2006.01)n
FI:   B29C55/12; B32B27/34; C08J5/18 CFG; B29K77:00; B29L7:00

According to International Patent Classification (IPC) or to both national classification and IPC

**B. FIELDS SEARCHED**

Minimum documentation searched (classification system followed by classification symbols)

B29C55/12; B32B27/34; C08J5/18; B29K77/00; B29L7/00

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | WO 2021/200489 A1 (TOYOBO CO., LTD.) 07 October 2021 (2021-10-07)<br>entire text | 1-8 |
| A | JP 2010-253711 A (TOYO BOSEKI) 11 November 2010 (2010-11-11)<br>entire text | 1-8 |
| A | WO 2019/131752 A1 (UNITIKA LTD ) 04 July 2019 (2019-07-04)<br>entire text | 1-8 |
| A | JP 2017-2114 A (GUNZE KK) 05 January 2017 (2017-01-05)<br>entire text | 1-8 |
| P, A | JP 2023-9437 A (TOYOBO CO., LTD.) 20 January 2023 (2023-01-20)<br>entire text | 1-8 |
| P, A | JP 2023-15849 A (TOYOBO CO., LTD.) 01 February 2023 (2023-02-01)<br>entire text | 1-8 |

☐ Further documents are listed in the continuation of Box C.   ☑ See patent family annex.

| * Special categories of cited documents: | |
|---|---|
| "A" document defining the general state of the art which is not considered to be of particular relevance | "T" later document published after the international filing date or priority date and not in conflict with the application but cited to understand the principle or theory underlying the invention |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **20 April 2023** | **09 May 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915 Japan** | |
| | Telephone No. |

Form PCT/ISA/210 (second sheet) (January 2015)

**INTERNATIONAL SEARCH REPORT**
Information on patent family members

International application No.

**PCT/JP2023/004182**

| Patent document cited in search report | | | Publication date (day/month/year) | Patent family member(s) | | | Publication date (day/month/year) |
|---|---|---|---|---|---|---|---|
| WO | 2021/200489 | A1 | 07 October 2021 | EP | 4129674 | A1 | |
| | | | | CN | 115243892 | A | |
| | | | | KR | 10-2022-0160603 | A | |
| JP | 2010-253711 | A | 11 November 2010 | (Family: none) | | | |
| WO | 2019/131752 | A1 | 04 July 2019 | US | 2020/0392298 | A1 | |
| | | | | EP | 3733376 | A1 | |
| | | | | CN | 111433000 | A | |
| | | | | KR | 10-2020-0079562 | A | |
| JP | 2017-2114 | A | 05 January 2017 | (Family: none) | | | |
| JP | 2023-9437 | A | 20 January 2023 | (Family: none) | | | |
| JP | 2023-15849 | A | 01 February 2023 | (Family: none) | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2008053133 A

- JP 2015125806 A